# FASCICULE DE BREVET EUROPEEN

(11) **EP 0 980 699 B1**
(45) Date de publication et mention de la délivrance du brevet: **08.06.2005**
(21) Numéro de dépôt: 99500081.7
(22) Date de dépôt: 14.05.1999
(51) Int. Cl.: B01D 21/02

(54) **Installation perfectionnée pour le nettoyage/récupération de liquides ayant des particules en suspension**
Anlage zur Reinigung oder Rückgewinnung von Flüssigkeiten mit suspendierten Teilchen
Plant for cleaning or recovering liquids with suspended particles

(30) Priorité: 29.05.1998 ES 9801403 U
(43) Date de publication de la demande: 23.02.2000
(73) Titulaire: Ona Electro-Erosion, S.A., 48200 Durango (Vizcaya) (ES)
(72) Inventeur: Martinez Mugica, Fernando, 48200 Durango (Vizcaya) (ES)
(74) Mandataire: Urizar Barandiaran, Miguel Angel

(56) Documents cités:
- EP-A- 0 803 274
- DE-U- 7 244 721
- GB-A- 2 252 058

## Description

La présente invention porte sur une installation perfectionnée pour le nettoyage / récupération de liquides ayant des particules en suspension.

Il est bien connu déjà que dans de nombreuses branches de l'industrie ou de l'agriculture, on dispose, à un moment donné, d'un liquide qui, étant donné qu'il possède des particules en suspension, n'est pas directement utilisable, aussi faut-il le filtrer, par exemple, le diélectrique d'une machine d'électro-érosion, le réfrigérant d'une machine-outil, le vin fermenté, etc.

Le problème apparaît, lorsque le filtre est obturé du fait de l'utilisation et de l'accumulation des particules.

Les solutions actuelles consistent soit à jeter le filtre, soit à le nettoyer, en jetant le matériel employé dans l'opération avec les impuretés à rejeter.

L'objet de l'invention est de faire une installation permettant même de récupérer le liquide employé lors des opérations de nettoyage du filtre, en ne rejetant que les impuretés.

Il est connu dans EP-A-0803274 d'utiliser dans une installation de clarification des unités de filtration à membranes qui fonctionnent sous pression et qui ne sont pas immergées, et des unités de filtration à membranes qui son immergées avec un flux du liquide à traiter orienté de l'extérieur vers l'intérieur du filtre, et en conséquence les unités de filtration à membranes doivent être lavées à contre-courant pour leur nettoyage.

Dans l'installation objet de l'invention il n'y a pas de filtres à membranes et il n'y a pas de nettoyage dans les unités de filtration à utiliser dans la clarification parce que les unités de filtration sont des bourses filtrantes où le flux est de l'intérieur de la bourse vers l'extérieur et ensuite la bourse est changée.

L'installation, qui fait l'objet de l'invention, se caractérise par le fait qu'elle se compose de:
a).- Un premier bassin, auquel arrive le liquide, pollué avec des particules en suspension, issues du nettoyage de l'équipement de filtrage, qui comporte un élément de séparation mobile en guise de guillotine, qui le divise en deux compartiments indépendants; à l'un d'entre eux arrive le liquide pollué et dans l'autre, les particules en suspension se sédimentent en formant des boues, qui sont évacuées vers
b).- un deuxième bassin, qui comprend une citerne-grille munie d'une bourse filtrante changeable dans laquelle sont retenues les particules en suspension de ces boues, le liquide sale récupéré étant évacué vers
c).- un troisième bassin de stockage, à partir duquel ce liquide sale est recyclé vers l'équipement de filtrage.

Elle se caractérise également par le fait que le premier bassin mentionné comporte une zone de fond rabaissée de niveau par rapport au reste du fond, ce qui permet une continuité grâce à une zone inclinée, les boues se sédimentant dans ces zones du fond rabaissé et incliné. Il y a une conduite de sortie vers le deuxième bassin pour l'évacuation des liquides et des boues.

Une autre de ses caractéristiques est que le premier bassin dispose d'une conduite-déversoir qui arrive jusqu'au troisième bassin, permettant un flux unidirectionnel de liquide sale lorsque, les boues étant sédimentées, on atteint ou l'on dépasse un certain niveau maximum dans le premier bassin mentionné, détecté par un ou plusieurs capteurs de niveau.

Pour mieux comprendre l'objet de la présente invention, un mode préférentiel de réalisation pratique est présenté dans les plans, susceptible de changements accessoires qui n'en dénature pas le principe.

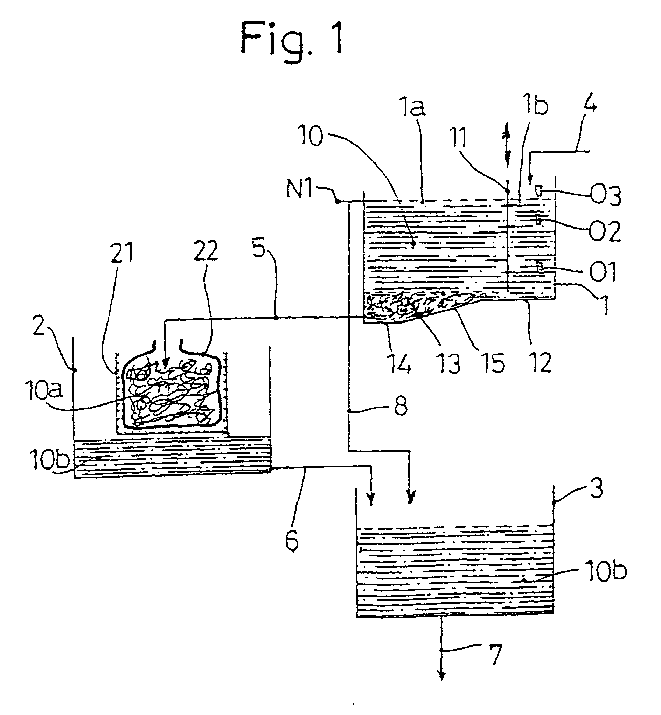

La figure 1 est une représentation de l'invention qui fait l'objet de l'invention.

Une installation pour le nettoyage des filtres et la récupération du liquide employé lors de ce nettoyage, conformément à l'invention, comprend une conduite (4) de liquide sale (10) - issu du nettoyage du filtre-, qui atteint un premier bassin (1). Le liquide employé pour nettoyer le filtre est le même que celui que l'on veut filtrer pour sa récupération ultérieure.

Ce premier bassin (1) comporte un élément de séparation (11) mobile en guise de guillotine, qui le divise en deux compartiments (1 a) (1 b) pouvant être rendus indépendants. Au compartiment (1b) arrive le liquide sale et dans le compartiment (1a) les résidus (13) se sédimentent.

Le bassin (1) comporte une zone de fond (14) rabaissée de niveau par rapport au reste du fond (12), ce qui permet une continuité, grâce à une zone inclinée (15). Grâce à quoi, on met en place une zone dans laquelle est favorisée la sédimentation des résidus (13) susmentionnée.

Une conduite (5) permet l'évacuation du liquide et des boues (10) vers un deuxième bassin (2)

Dans ce deuxième bassin (2), on dispose d'une citerne intérieure (21) qui comporte une bourse changeable (22).

La citerne intérieure (21) présente une structure grillagée et la bourse changeable (22) est en matériel filtrant.

Le liquide sale accompagné des boues sédimentées (10) atteint l'intérieur de la bourse changeable (22) où sont retenus les boues (10 a) mais qui laisse passer le liquide (10b) filtré -qui arrive au bassin (2) à travers une citerne/grille (21) qui positionne la bourse (22).

Le liquide (10b) récupéré a les caractéristiques et la saleté propres au liquide restant à filtrer -qui n'a pas été employé dans le nettoyage du filtre-. Il reprend le circuit normal de nettoyage à travers une conduite de sortie (7).

Additionnellement, l'installation de l'invention dispose, dans le premier bassin cité (1), une conduite-déversoir (8) qui arrive au troisième bassin (3) cité, ce qui permet d'obtenir un flux unidirectionnel du liquide (10b) -une fois débarrassé de la boue décantée (13) -lorsque ce liquide atteint ou dépasse un certain niveau (N1) détecté par des capteurs de niveau (01), (02), (03) -voir figure 1-.

## Revendications

1. Installation perfectionnée pour le nettoyage/récupération de liquides ayant des particules en suspension, qui se compose de:
a).- Un premier bassin (1) auquel arrive le liquide pollué avec des particules en suspension issues du nettoyage de l'équipement de filtrage, qui comporte un élément de séparation mobile (11) en guise de guillotine, qui le divise en deux compartiments (1a) (1b) pouvant être rendus indépendants, le liquide pollué arrivant dans l'un d'entre eux (1b) et, les particules en suspension se sédimentant en formant des boues (13) dans l'autre (1a);
b) une conduite (5) d'évacuation des boues (13) du premier bassin vers
c).- un second bassin (2) qui comprend une citerne intérieure (21) qui comporte une bourse changeable (22) où sont retenues les particules en suspension (10a) de ces boues (13), la citerne intérieure (21) presantant une structure grillagée et la bourse changeable (22) étant en matériel filtrant
d) une conduite d'évacuation (6) de liquide sale (10b) du second bassin (2) vers
e).- un troisième bassin (3) de stockage, à partir duquel est recyclé ce liquide sale vers l'équipement de filtrage.

2. Installation perfectionnée pour le nettoyage/récupération de liquides ayant des particules en suspension, conformément à la revendication précédente, **se caractérisant par le fait que** le premier bassin (1) comporte dans le compartiment (1a) une zone de fond (14) rabaissée de niveau par rapport au reste du fond (12), ce qui permet une continuité grâce à une zone inclinée (15) dans ces zones de fond (14) rabaissée et inclinée où les boues (13) se sédimentent, et il y a une conduite de sortie (5) vers le deuxième bassin (2) pour l'évacuation de ces liquides et de ces boues.

3. Installation perfectionnée pour le nettoyage/récupération de liquides ayant des particules en suspension, conformément aux revendications précédentes, **se caractérisant par le fait que** le premier bassin (1) mentionné dispose d'une conduite-déversoir (8), qui arrive au troisième bassin (3), et des capteurs de niveau (01), (02), (03), ce qui permet un flux unidirectionnel du liquide sale (10b), lorsque, les boues (13) étant sédimentées, on atteint ou l'on dépasse un certain niveau maximum (N1) dans le premier bassin (1).

## Patentansprüche

1. Weiterentwickelte Installation für die Aufbereitung / Rückgewinnung von mit schwebenden Feststoffteilchen verunreinigten Flüssigkeiten, **dadurch gekennzeichnet, dass** sie aus folgenden Einrichtungen besteht:
a) Ein erster Abscheidetank (1) für die Aufnahme der von der Reinigung von Filteranlagen stammenden und mit schwebenden Feststoffteilchen verunreinigten Flüssigkeit, der mit einer mobilen Trennvorrichtung (11) nach Art einer Guillotine versehen ist und mit deren Hilfe der Tank in zwei von einander unabhängige Aufnahmebehälter (1a) und (1b) getrennt werden kann. Diese Unterbehälter können vollkommen unabhängig gemacht werden, wobei dann einer derselben (1b) für die Aufnahme der verunreinigten Flüssigkeiten und im zweiten Behälter (1a) das Absetzen der schwebenden Feststoffteilchen und die Bildung von Schlamm (13) auf dem Boden erfolgt.
b) Ein Führungsrohr (5) für die Abführung des im ersten Aufnahmebehälter angesammelten Schlamms (13) in
c) einen zweiten Aufnahmebehälter (2), der mit einem eingebauten Sammelbehälter (21) versehen ist, in dessen Inneren ein auswechselbarer Sammelbeutel (22) für den Rückbehalt der in den eingeführten Schlämmen (13) enthaltenen schwebenden Feststoffteilchen (10a) vorgesehen ist, wobei dieser innere Sammelbehälter (21) eine Gitterstruktur aufweist und der auswechselbare Sammelbeutel (22) aus Filtermaterial besteht.
d) Ein Abführrohr (6) für die verunreinigte Flüssigkeit (10b) des zweiten Aufnahmebehälters (2) in
e) einen dritten Speichertank (3) von dem ausgehend die verunreinigte Flüssigkeit für das Recyceln über die Filteranlage geführt wird.

2. Weiterentwickelte Installation für die Aufbereitung / Rückgewinnung von mit schwebenden Feststoffteilchen verunreinigten Flüssigkeiten nach dem vorherigen Anspruch, **dadurch gekennzeichnet, dass** der genannte Abscheidetank (1) im zweiten Aufnahmebehälter (1b) über einen Bodenbereich (14) verfügt, welcher tiefer als der normale Tankboden (12) angeordnet ist, wobei dieser tiefer gelegte Bodenbereich (14) über eine Schräge (15) mit dem normalen Tankboden verbunden ist und sich auf diesem tieferen Niveau die vorgenannten Schlämme (13) absetzen sollen. Von diesem Bereich ausgehend ist eine Ablaufführung (5) in den oben genannten zweiten Sammelbehälter (2) für das Abführen der Flüssigkeit und abgesetzten Schlämme vorgesehen.

3. Weiterentwickelte Installation für die Aufbereitung / Rückgewinnung von mit schwebenden Feststoffteilchen verunreinigten Flüssigkeiten nach den vorherigen Ansprüchen, **dadurch gekennzeichnet, dass** der genannte erste Abscheidetank (1) mit einer bis zu dem oben genannten dritten Aufnahmebehälter (3) reichenden Überlaufführung (8) und den Füllstandssensoren (01), (02) und (03) ausgerüstet ist, mit deren Hilfe in dem Moment, in dem die sich abgesetzten Schlämme (13) einen maximalen Füllstand (N1) erreichen bzw. diesen überschreiten, das Ablaufen der verunreinigten Flüssigkeit (10b) in eine Richtung möglich gemacht wird.

## Claims

1. Improved installation, for cleaning/recovering liquids with particles in suspension, **characterised** because it is comprised of:
a) a first tank (1), which the contaminated liquid with particles in suspension resulting from cleaning the filtering equipment, accesses. This has a mobile separation element (11) like a guillotine, which subdivides it into two independent compartments (1a), 1b), which can be made independent. The contaminated liquid reaches one of them (1b) and in the other compartment (1a) the particles in suspension settle, forming sludge (13);
b) a conduit (5) for discharging sludge (13) from the first tank to:
c) a second tank (2), which comprises an inner cistern (21), which has an exchangeable bag (22), where the particles in suspension (10a) from this sludge (13), are retained. The inner cistern (21) has a grating structure and the exchangeable bag (22) is made of filtering material.
d) a discharge conduit (6) for soiled liquid (10b) from the second tank (2) to
e) a third storage tank (3), from which this soiled liquid is recycled to the filtering equipment.

2. Improved installation, for cleaning/recovering liquids with particles in suspension, according to previous claim, **characterised** because the aforementioned first tank (1) includes in compartment (1a) a bottom area (14) which is lower in level with respect to the rest of the bottom (12), thus offering continuity with a sloping area (15). In these lowered and sloping bottom areas (14) the sludge (13) settles, incorporating an outlet conduit (5) to this second tank (2), to discharge these liquids and sludge.

3. Improved installation, for cleaning/recovering liquids with particles in suspension, according to previous claims, **characterised** because in the first aforementioned tank (1) it has a conduit-overflow (8), and level sensors (01), (02), (03), which reaches the third aforementioned tank (3), permitting the one-directional flow of soiled liquid (10b), when, after the sludge (13) has settled, a certain maximum level (N1) is reached or surpassed in the aforementioned first tank (1).
